# FASCICULE DE BREVET EUROPEEN

(11) **EP 2 238 088 B1**
(45) Date de publication et mention de la délivrance du brevet: **14.11.2018**
(21) Numéro de dépôt: 08872715.1
(22) Date de dépôt: 12.12.2008
(51) Int. Cl.: C04B 24/26, C04B 28/14, C04B 103/22

(54) **UTILISATION D'UN ADJUVANT POUR LIANT HYDRAULIQUE À BASE DE SULFATE DE CALCIUM**
VERWENDUNG VON ADDITIVEN FÜR GIPSBASIERTE HYDRAULISCHE BINDEMITTEL
USE OF ADDITIVES FOR HYDRAULIC BINDER BASED ON CALCIUM SULFATE

(30) Priorité: 14.12.2007 FR 0708715
(43) Date de publication de la demande: 13.10.2010
(73) Titulaire: Etex Building Performance International, 8400 Avignon (FR)
(72) Inventeur: FAURE, Jean-Michel, F-69600 Oullins (FR); RINALDI, David, F-01630 Saint Jean De Gonville (FR); NARANJO, Horacio, F-38200 JARDIN (FR)
(74) Mandataire: Vaeck, Elke
(86) Numéro de dépôt international: PCT/FR2008/001731
(87) Numéro de publication internationale: WO 2009/103885

(56) Documents cités:
- EP-A- 1 270 530
- WO-A-01/81268
- WO-A2-98/28353
- DE-A1- 10 063 291
- GB-A- 2 319 522
- US-A- 3 544 344
- US-A- 4 293 344
- US-A1- 2004 187 741
- US-B1- 7 261 772

## Description

La présente invention a pour objet l'utilisation d'adjuvant dans des liants hydrauliques, en particulier dans les enduits à base de plâtre ou à base de sulfate de calcium anhydre.

Les enduits actuels à base de plâtre contiennent généralement divers additifs ou adjuvants qui permettent de contrôler la rhéologie de l'enduit et / ou la prise de l'enduit. Notamment, il est intéressant pour les fabricants de proposer des enduits prêt à l'emploi sous forme de pâte liquide ou semi-liquide dont l'hydratation du sulfate de calcium est bloquée par des agents bloquants. L'avantage de ce genre d'enduit prêt à l'emploi est que l'utilisateur n'a pas besoin de procéder au mélange de l'eau et du plâtre (gâchage). Ce blocage permet à l'enduit de rester sous forme de pâte liquide ou semi-liquide et de ne pas durcir dans son emballage. Aussi l'utilisateur de l'enduit aura besoin de débloquer le plâtre pour permettre la reprise de l'hydratation par l'ajout d'un agent débloquant.

Cependant pour que l'utilisateur puisse réaliser son ouvrage dans de bonnes conditions, il est nécessaire que l'enduit reste suffisamment fluide après déblocage pour être maniable aisément durant toute la réalisation du chantier.

Or lorsque l'on utilise un agent bloquant, tel que des polymères d'acide acrylique, dès que l'enduit est débloqué par ledit agent débloquant, la rhéologie de l'enduit est mal maîtrisée. En effet l'enduit perd peu à peu sa fluidité.

Afin de répondre aux exigences des utilisateurs il est devenu nécessaire de trouver un autre moyen pour maîtriser la fluidité après déblocage des enduits à base de plâtre bloqué.

Aussi le problème que se propose de résoudre l'invention est de fournir un nouvel adjuvant adapté pour fluidifier et bloquer les compositions de liants hydrauliques.

Demande de brevet US 2004/0187741 décrit un enduit prêt à l'emploi comprenant de calcium carbonate calciné comme liant hydraulique et de l'acide acrylique ou un de ses sels comme agent bloquant.

Demande de brevet DE 100 63 291 décrit l'utilisation des fluidifiants à base de polycarboxylate pour des chapes à écoulement à base d'anhydrite.

Demande de brevet WO 98/28353 décrit l'utilisation de certaines polymères comprenant des groupes carboxyles comme fluidifiant dans des matériaux de construction minéraux prêts à l'emploi.

De manière inattendue, les inventeurs ont mis en évidence qu'il est possible d'utiliser des copolymères d'acide d'acrylique et de poly(oxy)alkylène pour obtenir un adjuvant utile en tant que fluidifiant et agent bloquant pour les liants hydrauliques.

Dans ce but la présente invention propose l'utilisation d'au moins un copolymère ou un de ses sels en tant qu'agent fluidifiant et agent bloquant pour une composition comprenant de l'eau et un liant hydraulique à base de sulfate de calcium ledit copolymère comprenant au moins un motif de formule (I) 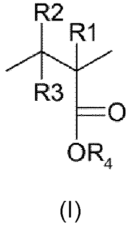 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 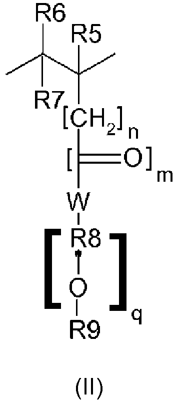
avec
R5, R6, R7 représentent indépendamment un atome d'hydrogène, un radical alkyle linéaire ou ramifié en C₁ à C₂₀ ou un radical -(CH₂)ₙ-(C=O)ₘ-W- (R8-O)_{q}-R9;
R8 représente un radical alkyle linéaire ou ramifié en C₂ à C₂₀ ;
R9 représente un atome d'hydrogène, ou un radical alkyle linéaire ou ramifié en C₁ à C₂₀ ;
W représente un atome d'oxygène ou d'azote ;
n est un nombre entier compris de 0 à 2 ;
m est un nombre entier égal à 0 ou 1 ;
q est un nombre entier compris 2 et 30 ;
et dont la masse molaire dudit copolymère est comprise de 500 à 18 000 daltons, la proportion relative de motif (I) par rapport au motif (II) dans le copolymère est comprise de 70/30 à 99/1.

L'invention propose également une composition comprenant de l'eau, un liant hydraulique à base de sulfate de calcium, et au moins ledit copolymère ou un de ses sels.

Enfin, l'invention propose des éléments pour le domaine de la construction obtenus à partir d'un liant hydraulique à base de sulfate de calcium comprenant au moins ledit copolymère ou un de ses sels.

L'invention offre des avantages déterminants, en particulier l'adjuvant utilisé selon l'invention permet de bloquer l'hydratation du sulfate de calcium pendant au moins 3 mois, 12 mois, également au moins 18 mois, voire 24 mois, selon la quantité d'adjuvant utilisée.

L'invention offre comme autre avantage que l'adjuvant utilisé selon l'invention permet de part sa propriété fluidifiante de formuler des enduits en utilisant des quantités d'eau réduites par rapport aux quantités classiquement utilisées.

Un autre avantage de la présente invention est que l'adjuvant utilisé selon l'invention est utilisé comme agent fluidifiant et agent bloquant, ce qui évite le recours à 2 additifs différents pour obtenir le même résultat. L'adjuvant utilisé selon l'invention peut être qualifié de produit « 2 en 1 ».

Un autre avantage de la présente invention est que l'enduit présente une évolution moindre de sa rhéologie dans la période post-déblocage. Habituellement, en utilisant les agents débloquant classiques, l'utilisateur est tenté d'ajouter de l'eau à la formulation pour maintenir l'enduit fluide ce qui diminue la résistance mécanique du produit fini. En effet, la présence d'eau détériore les propriétés mécaniques du matériau durci, et éventuellement peut provoquer l'apparition de fissures.

Enfin l'invention a pour avantage de pouvoir être mise en oeuvre dans toutes industries, notamment l'industrie du bâtiment, l'industrie chimique (adjuvantiers) et à l'ensemble des marchés de la construction (bâtiment, génie civil ou usine de préfabrication), à l'industrie de la construction d'éléments en plâtre.

D'autres avantages et caractéristiques de l'invention apparaîtront clairement à la lecture de la description et des exemples donnés à titre purement illustratifs et non limitatifs qui vont suivre.

Par l'expression adjuvant, on entend selon la présente invention tout composé qui incorporé dans une formulation permet d'apporter des propriétés particulières.

Par l'expression liants, on entend selon la présente invention tout composé ayant la propriété d'apporter de la cohésion à la formulation dans laquelle il est incorporé, et permet d'apporter des caractéristiques mécaniques à ladite formulation (par exemple résistance en compression, en traction, adhérence). Ce liant est destiné à lier des éléments inertes tels que des granulats.

Par l'expression liants hydrauliques, on entend selon la présente invention tout composé ayant la propriété de s'hydrater en présence d'eau et dont l'hydratation permet d'obtenir un solide ayant des caractéristiques mécaniques. L'expression liant hydraulique désigne également les liants hydriques.

Par l'expression prise, on entend selon la présente invention le passage à l'état solide par réaction chimique.

Par l'expression enduit, on entend selon la présente invention une formulation semi-liquide qui après mise en oeuvre va acquérir des propriétés mécaniques. A titre d'exemple d'enduit, on peut citer les enduits de bouchage, de remplissage, de jointoiement, de lissage ou de finition.

Par l'expression agent bloquant, on entend selon la présente invention tout adjuvant permettant d'empêcher la prise de tous liants hydrauliques.

Par l'expression agent débloquant, on entend selon la présente invention tout adjuvant permettant de supprimer l'action bloquante de l'agent bloquant. A titre d'agent débloquant convenant selon l'invention, on peut citer le sulfate d'aluminium, l'acide sulfurique, l'acide chlorhydrique, l'hydrogénosulfate de sodium, l'hydrogénosulfate de potassium, le sulfate d'aluminium potassium, le sulfate de calcium dihydrate et leurs mélanges.

Par l'expression agent fluidifiant, on entend selon la présente invention tout adjuvant permettant de fluidifier.

Par l'expression éléments pour le domaine de la construction, on entend selon la présente invention tout élément constitutif d'une construction comme par exemple un sol, un mur, une cloison, un plafond, une poutre, un plan de travail, une corniche.

L'invention concerne l'utilisation d'au moins un copolymère ou un de ses sels en tant qu'agent fluidifiant et agent bloquant pour une composition comprenant de l'eau et un liant hydraulique à base de sulfate de calcium ledit copolymère comprenant au moins un motif de formule (I) 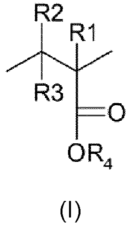 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 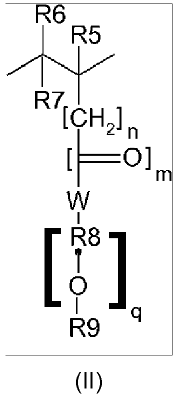
avec
R5, R6, R7 représentent indépendamment un atome d'hydrogène, un radical alkyle linéaire ou ramifié en C₁ à C₂₀ ou un radical -(CH₂)ₙ-(C=O)ₘ-W- (R8-O)_{q}-R9;
R8 représente un radical alkyle linéaire ou ramifié en C₂ à C₂₀ ;
R9 représente un atome d'hydrogène, ou un radical alkyle linéaire ou ramifié en C₁ à C₂₀ ;
W représente un atome d'oxygène ou d'azote ;
n est un nombre entier compris de 0 à 2 ;
m est un nombre entier égal à 0 ou 1 ;
q est un nombre entier compris 2 et 30 ;
et dont la masse molaire dudit copolymère est comprise de 500 à 18 000 daltons, la proportion relative de motif (I) par rapport au motif (II) dans le copolymère est comprise de 70/30 à 99/1.

De préférence, le copolymère utilisé selon l'invention ou un de ses sels possède un radical R1 représentant un atome d'hydrogène.

De préférence, le copolymère utilisé selon l'invention ou un de ses sels possède un radical R2 représentant un atome d'hydrogène.

De préférence, le copolymère utilisé selon l'invention ou un de ses sels possède un radical R3 représentant un atome d'hydrogène.

De préférence, le copolymère utilisé selon l'invention ou un de ses sels possède un radical R4 représentant un atome d'hydrogène.

De préférence, le copolymère utilisé selon l'invention ou un de ses sels possède un radical R5 représentant un atome d'hydrogène.

De préférence, le copolymère utilisé selon l'invention ou un de ses sels possède un radical R6 représentant un atome d'hydrogène.

De préférence, le copolymère utilisé selon l'invention ou un de ses sels possède un radical R7 représentant un atome d'hydrogène.

De préférence, le copolymère utilisé selon l'invention ou un de ses sels possède un atome W représentant un atome d'oxygène.

De préférence, le copolymère utilisé selon l'invention ou un de ses sels possède un radical R8 représentant un radical alkyl en C₂.

De préférence, le copolymère utilisé selon l'invention ou un de ses sels possède un radical R9 représentant un radical alkyl en C₁ ou un atome d'hydrogène.

Le copolymère utilisé selon l'invention ou un de ses sels possède un nombre entier q compris 2 et 30, de préférence compris de 4 à 25.

Le copolymère utilisé selon l'invention ou un de ses sels peut être utilisé en tant qu'agent fluidifiant et agent bloquant.

En particulier, le copolymère utilisé selon l'invention ou un de ses sels peut être utilisé pour bloquer un liant hydraulique à base de sulfate de calcium, notamment les enduits à base de plâtre.

Plus particulièrement le copolymère utilisé selon l'invention va permettre de formuler des enduits contenant moins d'eau et de maîtriser la fluidité dudit enduit après déblocage.

Encore plus particulièrement, le copolymère utilisé selon l'invention ou un de ses sels convient tout particulièrement pour bloquer et pour maîtriser la fluidité des enduits à base de plâtre préalablement bloqués.

En particulier, le copolymère utilisé selon l'invention ou un de ses sels peut être utilisé comme adjuvant pour les liants hydrauliques choisi parmi les plâtres ou les liants à base de sulfate de calcium anhydre. Parmi les liants hydrauliques à base de sulfate de calcium, les plâtres à base de sulfate de calcium hemihydraté (α ou β) conviennent tout particulièrement selon l'invention ou les liants à base de sulfate de calcium anhydre.

Le copolymère utilisé selon l'invention ou ses sels peuvent présenter une structure chimique variée. En particulier, la répartition des motifs (I) et (II) au sein du copolymère peut varier d'une molécule à une autre. Notamment le copolymère utilisé selon l'invention peut présenter une structure à bloc, statistique, alternée ou à gradient.

Par structure à bloc, on entend selon l'invention une structure comprenant des blocs distincts de chacun des motifs monomères.

Par structure statistique, on entend selon l'invention une structure comprenant les motifs monomères répartis de manière statistique ou encore aléatoire dans la chaîne polymère.

Par structure alternée, on entend selon l'invention une structure où les motifs monomères sont alternés dans la chaîne polymère.

Par structure à gradient, on entend selon l'invention une structure où la concentration de chaque motif monomère varie inversement proportionnelle l'une par rapport à l'autre.

De préférence, le copolymère utilisé selon l'invention présentera une structure statistique ou à gradient.

Plus préférentiellement, la proportion relative de motif (I) par rapport au motif (II) est comprise de 80 / 20 à 98 / 2.

Encore plus préférentiellement, la proportion relative de motif (I) par rapport au motif (II) est comprise de 85 / 15 à 97 / 3.

Le copolymère utilisé selon l'invention ou ses sels possèdent une masse molaire comprise de 500 à 18 000 daltons, plus particulièrement comprise de 1000 à 16 000 daltons, de préférence comprise de 1500 à 15 000 daltons, plus préférentiellement comprise de 2000 à 10 000, encore plus préférentiellement de 2000 à 6000 daltons.

Le copolymère utilisé selon l'invention peut se présenter sous forme de sels ou sous forme acide, en totalité ou en partie. Les sels ou les ions convenant utilisés selon l'invention peuvent être choisi parmi les métaux tels que décrits dans la classification périodique des éléments, en particulier les métaux alcalins ou les métaux alcalino-terreux. D'autres métaux, comme les métaux de transition peuvent convenir également.

Les copolymères sont obtenus par copolymérisation, de préférence de type radicalaire de monomères appropriés. La copolymérisation peut être conduite de manière conventionnelle pour l'homme du métier.

De préférence, le copolymère utilisé selon l'invention est réalisé à partir de monomère d'acide acrylique.

De préférence, le copolymère utilisé selon l'invention est réalisé à partir de monomère de formule suivante :

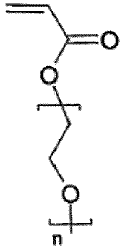

Encore plus préférentiellement, le copolymère utilisé selon l'invention est réalisé à partir de monomère de formule suivante :

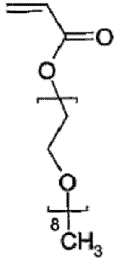

La concentration de copolymère utilisé selon l'invention dans la formulation dépend de l'application visée. Le copolymère utilisé selon l'invention peut être utilisé sous forme de solution liquide, par exemple une solution aqueuse, sous forme de dispersion, ou encore sous forme de poudre. De préférence le copolymère utilisé selon l'invention ou un de ses sels sera utilisé à une concentration comprise de 0,01 à 10 %, de préférence de 0,1 à 5%, encore plus préférentiellement de 0,2 à 2 % en poids sec de copolymère par rapport au poids sec de liant hydraulique.

Enfin, le copolymère formulé pourra être utilisé seul ou en association avec un ou plusieurs autres adjuvants tels qu'un accélérateur, retardateur, épaississant, agent rhéologique ou éventuellement un autre dispersant, afin d'ajuster les propriétés rhéologiques et de prise du matériau.

L'invention a également pour objet une composition comprenant de l'eau, un liant hydraulique à base de sulfate de calcium, et au moins un copolymère ou un de ses sels utilisés selon l'invention ledit copolymère comprenant au moins un motif de formule (I) 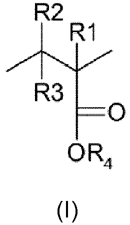 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 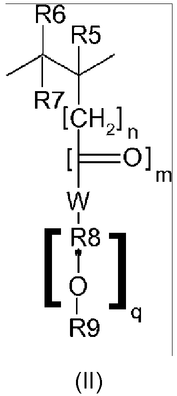
avec
R5, R6, R7 représentent indépendamment un atome d'hydrogène, un radical alkyle linéaire ou ramifié en C₁ à C₂₀ ou un radical -(CH₂)ₙ-(C=O)ₘ-W- (R8-O)_{q}-R9;
R8 représente un radical alkyle linéaire ou ramifié en C₂ à C₂₀ ;
R9 représente un atome d'hydrogène, ou un radical alkyle linéaire ou ramifié en C₁ à C₂₀;
W représente un atome d'oxygène ou d'azote ;
n est un nombre entier compris de 0 à 2 ;
m est un nombre entier égal à 0 ou 1 ;
q est un nombre entier compris 2 et 30 ;
et dont la masse molaire dudit copolymère est comprise de 500 à 18 000 daltons, la proportion relative de motif (I) par rapport au motif (II) dans le copolymère est comprise de 70/30 à 99/1.

Le copolymère utilisé selon l'invention ou un de ses sels peut être incorporé dans le liant hydraulique sous forme de solution liquide, sous forme de dispersion, ou encore sous forme de poudre.

Le liant hydraulique selon l'invention peut être utilisé pour la fabrication d'éléments pour le domaine de la construction, notamment pour tout élément constitutif d'une construction comme par exemple un sol, un mur, une cloison, un plafond, une poutre, une corniche, un plan de travail.

La concentration de copolymère utilisé selon l'invention dans l'enduit dépend de l'application visée. De préférence le copolymère utilisé selon l'invention ou un de ses sels sera utilisé à une concentration comprise de 0,05 à 5 %, de préférence de 0,05 à 2 % en poids de copolymère par rapport au poids de l'enduit.

L'invention a également pour autre objet des éléments pour le domaine de la construction obtenus à partir d'une composition comprenant de l'eau, un liant hydraulique à base de sulfate de calcium, un agent de déblocage, et au moins un copolymère ou un de ses sels ledit copolymère comprenant au moins un motif de formule (I) 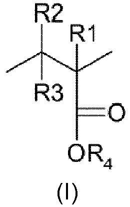 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 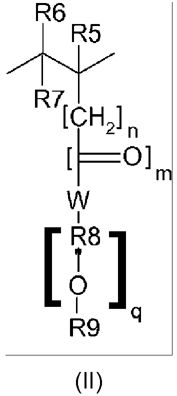
avec
R5, R6, R7 représentent indépendamment un atome d'hydrogène, un radical alkyle linéaire ou ramifié en C₁ à C₂₀ ou un radical -(CH₂)ₙ-(C=O)ₘ-W- (R8-O)_{q}-R9; R8 représente un radical alkyle linéaire ou ramifié en C₂ à C₂₀ ;
R9 représente un atome d'hydrogène, ou un radical alkyle linéaire ou ramifié en C₁ à C₂₀ ;
W représente un atome d'oxygène ou d'azote ;
n est un nombre entier compris de 0 à 2 ;
m est un nombre entier égal à 0 ou 1 ;
q est un nombre entier compris 2 et 30 ;
et dont la masse molaire dudit copolymère est comprise de 500 à 18 000 daltons, la proportion relative de motif (I) par rapport au motif (II) dans le copolymère est comprise de 70/30 à 99/1.

La figure 1 représente la viscosité de 3 enduits, avec ou sans copolymère utilisé selon l'invention, en fonction du temps.

La figure 2 présente la viscosité relative de 3 enduits, avec ou sans copolymère utilisé selon l'invention, en fonction du temps.

Les exemples suivants illustrent l'invention sans en limiter la portée.

### EXEMPLES

### Exemple 1 : Synthèse d'un copolymère à base d'un macromonomère de type acrylique - copolymère 1

Dans un réacteur double-enveloppe de 1000mL, de l'eau (141.7g) et de l'acide thioglycolique (3.79g) sont pesés successivement. Un montage réactionnel est réalisé qui comprend une agitation mécanique, un réfrigérant, une arrivée d'azote et une sonde de température. Le milieu réactionnel est mis à dégazer sous azote et est chauffé à 85°C à l'aide de la double-enveloppe. Après atteinte de la température de consigne et dégazage suffisant (environ 15 minutes), les 3 solutions ci-dessous sont ajoutés progressivement pendant 1h30:
- 7.14g vazo68WSP (thermoamorceur d'origine Dupont) dans 52.22g de NaOH 1M;
- 9.47g d'acide thioglycolique dans 14.93g eau;
- 39.2g AMPEG450 (origine ALDRICH) dans 225g eau et 118.1g d'acide acrylique.

Le milieu réactionnel est laissé à réagir encore 30 minutes après l'introduction de tous les réactifs. La solution de copolymère ainsi obtenue est laissée à refroidir puis neutralisée avec 61.2g de NaOH en pastilles. Une solution aqueuse incolore limpide est obtenue, dont le pH est égal à 6.

La masse molaire en poids du copolymère obtenu est de 3000 daltons (Mw). Elle a été évaluée par chromatographie d'exclusion stérique (SEC) en phase aqueuse utilisant un étalonnage pAANa. Le copolymère renferme en moyenne 95% de motifs acide acrylique et 5% de motifs AMPEG450.

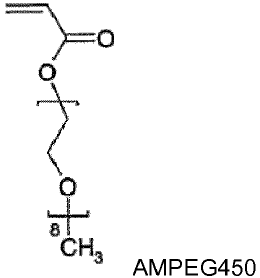

### Exemple 2 : Synthèse d'un copolymère à base d'un macromonomère de type allylique - copolymère 2

Dans un ballon tétracol de 500mL, de l'eau (160g), un macromonomère allylique de méthoxypolyéthylène glycol (33.4g AM1100 d'origine Clariant), de l'acide acrylique (8.3g) et de l'acide thioglycolique (1.58g) sont pesés successivement. Un montage réactionnel est réalisé qui comprend une agitation magnétique, un réfrigérant, une canne d'azote et une sonde de température . Le milieu réactionnel est chauffé à 85°C et après dégazage suffisant du milieu (environ 15 minutes) à l'azote, un thermoamorceur est ajouté (2.61g de 68WSP Vazo d'origine Dupont). Puis une solution de 33.3g d'acide acrylique, 131.5g d'eau et 1.83g d'acide thioglycolique est ajouté progressivement pendant 60 minutes. Après addition des réactifs, le milieu est laissé à réagir encore 1 heure supplémentaire. Une solution incolore légèrement trouble est obtenue dont le pH est égal à 2.

La masse molaire en poids du copolymère obtenu est de 3000 daltons (Mw). Elle a été évaluée par chromatographie d'exclusion stérique (SEC) aqueuse utilisant un étalonnage pAANa. Le copolymère renferme en moyenne 95% de motifs acide acrylique et 5% de motifs AllylMHOO.

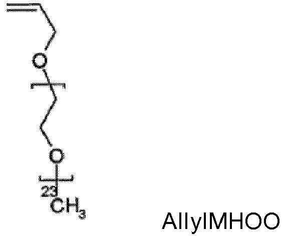

### Exemple 3 : Evaluation de l'effet bloquant et fluidifiant des copolymères 1 et 2 sur pâte liquide de semi-hydrate de sulfate de calcium :

Les effets bloquant et fluidifiant des copolymères 1 et 2 sont évalués sur une pâte liquide de semi-hydrate de sulfate de calcium gâchée à un ratio Eau / poudre (E/P=0.60). La fluidité de la pâte liquide est évaluée au moyen du test dit de « l'anneau d'étalement ». Un cylindre (encore appelé anneau d'étalement) de taille bien définie (largeur 30mm - Hauteur 50mm) est positionné sur le plan de travail, de manière à ce que le volume délimité par l'intérieur du cylindre et le plan de travail forme une cavité. Cette cavité est complètement remplie de pâte liquide à tester. Puis le cylindre est soulevé délicatement. Alors la pâte liquide à tester s'étale sur le plan de travail. La surface d'étalement de la pâte liquide à tester est déterminée. Le temps de blocage est évalué visuellement. Le plâtre est un plâtre β d'origine naturel SELECTA. Les copolymères issus des exemples 1 et 2 sont testés en comparaison d'un homopolymère d'acide acrylique (F11000a produit par la société SNF Floerger). La masse molaire en poids de cet homopolymère est de 3000 daltons (Mw) et a été évaluée par SEC aqueuse utilisant un étalonnage pAANa.

Les copolymères 1 et 2 sont comparés à un agent bloquant classique : un homopolymère d'acide acrylique.

Les essais ont été réalisés à un dosage en copolymère ou homopolymère sec de 0.25% par rapport au poids sec de semi-hydrate de sulfate de calcium. Les résultats sont consignés dans le tableau I suivant.

**Tableau I**

| **Référence** | **Etalement (mm)** |
|---|---|
| copolymère 1 | 125 |
| copolymère 2 | 120 |
| FI1000a | 60 |
| FI1000a + Fluidifiant (EthacrylM de LyondelI) | 60 |

Les résultats montrent un meilleur étalement de la pâte liquide en présence des copolymères utilisés selon l'invention comparé à l'homopolymère d'acide acrylique, additivé ou non d'un fluidifiant. La pâte liquide est bien plus fluide en utilisant les copolymères 1 et 2.

Dans tous les cas, ces pâtes de semi-hydrate de sulfate de calcium ne sont pas prise après 3 mois.

### Exemple 4 : Evaluation de l'effet bloquant et fluidifiant du copolymère 1 sur un enduit à base de semi-hydrate de sulfate de calcium :

Les effets bloquant et fluidifiant du copolymère 1 sont évalués sur des enduits à base de semi-hydrate de sulfate de calcium. Différents enduits sont fabriqués à partir du copolymère 1 et d'un homopolymère d'acide acrylique (FI1000a produit par la société SNF Floerger) en association ou non d'un fluidifiant Ethacryl M (de LyondelI).

Les différents enduits préparés (voir tableau II) ne sont pas pris après 3 mois.

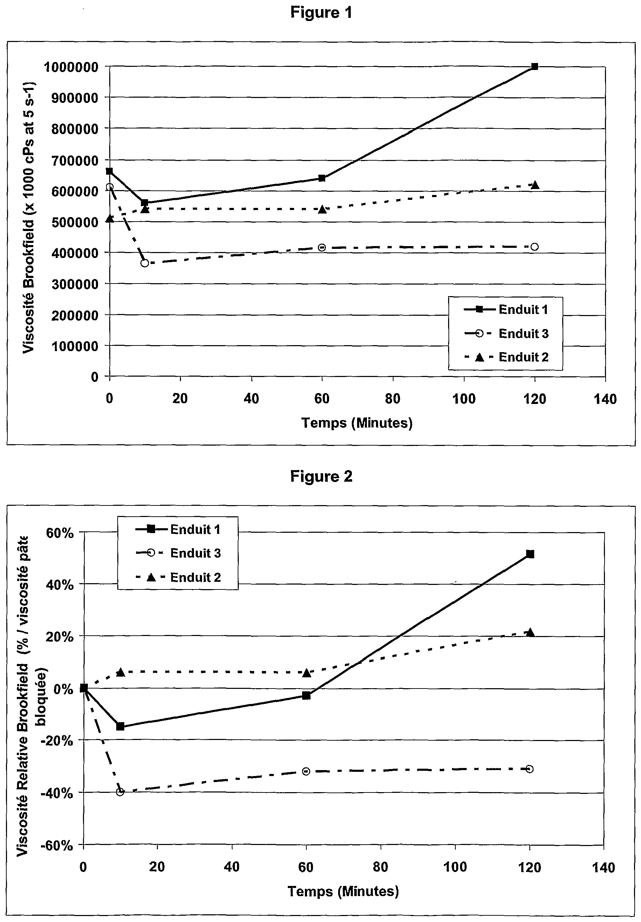

Une solution de sulfate d'aluminium hexadecahydraté (société Sigma) est ajoutée à chacun des enduits pour procéder au déblocage des enduits (2.56 g de solution pour 100 g de pâte bloquée). La viscosité de l'enduit est mesurée à l'aide d'un viscosimètre Brookfield équipé de l'axe spindle D à une vitesse de 2.5 s⁻¹. Les mesures sont opérées sur la pâte bloquée (To), puis au cours du temps après déblocage pendant 2 heures. Le tableau III et les figures 1 et 2 regroupent les valeurs et les évolutions de viscosité obtenues à partir de ces trois enduits.

**Tableau II**

| | | | **Enduit 1** | **Enduit 2** | **Enduit 3** |
|---|---|---|---|---|---|
| | | extrait sec | % m/m | % m/m | % m/m |
| Eau | eau du robinet | 1 00% | 26,20% | 24,03% | 26,19% |
| Anti-mousse | clerol NXZ | 100% | 0,06% | 0,06% | 0,06% |
| Plâtre | SH naturel Béta | 100% | 25,09% | 25,60% | 25,08% |
| Charge calcaire | mikhart 15 | 100% | 39,37% | 40,18% | 39,35% |
| Mica | MU 247 | 1 00% | 1,47% | 1,50% | 1,46% |
| Talc | talc luzenac | 100% | 2,74% | 2,79% | 2,73% |
| Polymère | Poval 217S | 100% | 0,34% | 0,35% | 0.34% |
| Epaississant | MHPC 20000P | 100% | 0,42% | 0,43% | 0,42% |
| Biocide | Acticide MBS | 100% | 0,30% | 0,31% | 0,30% |
| Liant | Airflex EP17 | 50% | 3,54% | 3,61% | 3,54% |
| Bloquant | FI1000A | 53,10% | 0,47% | | 0,47% |
| Bloquant/Fluidifiant | **copolymère 1** | 22,28% | | 1.15% | |
| Superplastifiant | Ethacryl | | | | 0,05% |
| | | | 100,00% | 100,00% | 100,00% |

**Tableau III**

| | | **Enduit bloqué** | **Pâte débloquée** | | |
|---|---|---|---|---|---|
| | | Viscosité (cPs) | Viscosité (cPs) | Viscosité (cPs) | Viscosité (cPs) |
| | | T0 | T=10' | T=60' | T=120' |
| | Temps (Minutes) | 0 | 10 | 60 | 120 |
| Enduit 1 | Viscosité (x 1000 cPs) | 660000 | 560000 | 640000 | 1000000 |
| | Viscosité/viscosité pâte bloquée (%) | 0% | -15,2% | -3,0% | 51,5% |
| Enduit 2 | Viscosité (x 1000 cPs) | 510000 | 540000 | 540000 | 620000 |
| | Viscosité/viscosité pâte bloquée (%) | 0% | 5,9% | 5,9% | 21,6% |
| Enduit 3 | Viscosité (x 1000 cPs) | 610000 | 365000 | 415000 | 420000 |
| | Viscosité/viscosité pâte bloquée (%) | 0% | -40,2% | -32,0% | -31,1% |

L'analyse des mesures de viscosité obtenues sur l'enduit préparé avec le copolymère 1 (enduit 2) montrent une très faible évolution au cours des 2 heures (120 minutes) qui suivent le déblocage par la solution de sulfate d'aluminium en comparaison de celles mesurées sur l'enduit avec l'homopolymère acrylique seul (enduit 1) qui présentent une très forte évolution après 1 heure, ou celles mesurées sur l'enduit préparé avec l'homopolymère acrylique associé à un fluidifiant (enduit 3) qui montrent une violente chute de viscosité juste après le déblocage par la solution de sulfate d'aluminium.

## Revendications

1. Utilisation d'au moins un copolymère ou un de ses sels en tant qu'agent fluidifiant et agent bloquant pour une composition comprenant de l'eau et un liant hydraulique à base de sulfate de calcium
ledit copolymère comprenant au moins un motif de formule (I) 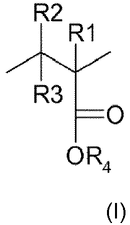 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 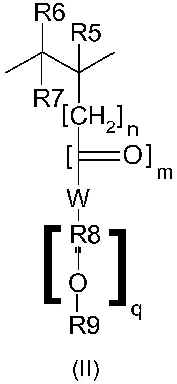
avec
R5, R6, R7 représentent indépendamment un atome d'hydrogène, un radical alkyle linéaire ou ramifié en C₁ à C₂₀ ou un radical-(CH₂)ₙ-(C=O)ₘ-W-(R8-O)_{q}-R9;
R8 représente un radical alkyle linéaire ou ramifié en C₂ à C₂₀;
R9 représente un atome d'hydrogène, ou un radical alkyle linéaire ou ramifié en C₁ à C₂₀;
W représente un atome d'oxygène ou d'azote ;
n est un nombre entier compris de 0 à 2 ;
m est un nombre entier égal à 0 ou 1 ;
q est un nombre entier compris 2 et 30 ;
et dont la masse molaire dudit copolymère est comprise de 500 à 18 000 daltons
la proportion relative de motif (I) par rapport au motif (II) dans le copolymère est comprise de 70 / 30 à 99 / 1.

2. Utilisation selon la revendication 1, **caractérisée en ce que** le liant hydraulique à base de sulfate de calcium est choisi parmi les plâtres à base de sulfate de calcium hemihydraté (α ou β) ou les liants à base de sulfate de calcium anhydre.

3. Utilisation selon la revendication 1, **caractérisée en ce que** l'on utilise ledit copolymère ou l'un de ses sels dont la structure est une structure bloc, statistique, alternée ou à gradient.

4. Utilisation selon la revendication 1, **caractérisée en ce que** l'on utilise ledit copolymère ou l'un de ses sels dont la masse molaire est comprise de 1000 à 16 000 daltons.

5. Utilisation selon la revendication 1 **caractérisée en ce que** l'on utilise ledit copolymère possédant un radical R1 représentant un atome d'hydrogène.

6. Utilisation selon la revendication 1 **caractérisée en ce que** l'on utilise ledit copolymère possédant un radical R2 représentant un atome d'hydrogène.

7. Utilisation selon la revendication 1 **caractérisée en ce que** l'on utilise ledit copolymère possédant un radical R3 représentant un atome d'hydrogène.

8. Utilisation selon la revendication 1 **caractérisée en ce que** l'on utilise ledit copolymère possédant un radical R4 représentant un atome d'hydrogène.

9. Utilisation selon la revendication 1 **caractérisée en ce que** l'on utilise ledit copolymère possédant un radical R5 représentant un atome d'hydrogène.

10. Utilisation selon la revendication 1 **caractérisée en ce que** l'on utilise ledit copolymère possédant un radical R6 représentant un atome d'hydrogène.

11. Utilisation selon la revendication 1 **caractérisée en ce que** l'on utilise ledit copolymère possédant un radical R7 représentant un atome d'hydrogène.

12. Utilisation selon la revendication 1 **caractérisée en ce que** l'on utilise ledit copolymère pour lequel W représente un atome d'oxygène.

13. Utilisation selon la revendication 1 **caractérisée en ce que** l'on utilise ledit copolymère possédant un radical R8 représentant un radical alkyl en C₂.

14. Utilisation selon la revendication 1 **caractérisée en ce que** l'on utilise ledit copolymère possédant un radical R9 représentant un radical alkyl en C₁ ou un atome d'hydrogène.

15. Utilisation selon la revendication 1 **caractérisée en ce que** l'on utilise ledit copolymère pour lequel q est un nombre entier compris de 4 à 25.

16. Composition comprenant de l'eau, un liant hydraulique à base de sulfate de calcium, et au moins un copolymère ou un de ses sels
ledit copolymère comprenant au moins un motif de formule (I) 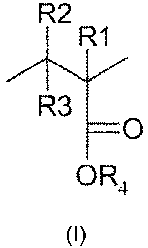 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 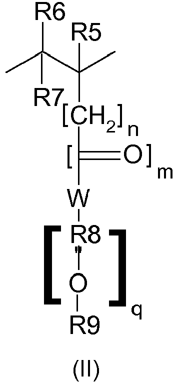
avec
R5, R6, R7 représentent indépendamment un atome d'hydrogène, un radical alkyle linéaire ou ramifié en C1 à C20 ou un radical-(CH2)n-(C=O)m-W- (R8-0)q-R9;
R8 représente un radical alkyle linéaire ou ramifié en C₂ à C₂₀;
R9 représente un atome d'hydrogène, ou un radical alkyle linéaire ou ramifié en C1 à C20;
W représente un atome d'oxygène ou d'azote;
n est un nombre entier compris de 0 à 2;
m est un nombre entier égal à 0 ou 1 ;
q est un nombre entier compris 2 et 30 ;
et dont la masse molaire dudit copolymère est comprise de 500 à 18 000 daltons
la proportion relative de motif (I) par rapport au motif (II) dans le copolymère est comprise de 70 / 30 à 99 / 1.

17. Utilisation d'une composition selon la revendication 16 pour la fabrication d'éléments pour le domaine de la construction, comprenant l'addition d'un agent de déblocage à ladite composition.

18. Eléments pour le domaine de la construction obtenus à partir d'une composition comprenant de l'eau, un liant hydraulique à base de sulfate de calcium, un agent de déblocage, et au moins un copolymère ou un de ses sels ledit copolymère comprenant au moins un motif de formule (I) 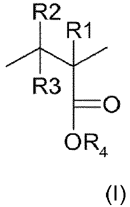 dans lequel
R1, R2, R3 représentent indépendamment un atome d'hydrogène, un radical alkyle linéaire ou ramifié en C₁ à C₂₀, ou un radical -(CH₂)ₚ-COOR ou une forme ionisée de celui-ci avec p est égal à 0 ou 1, et R est un atome d'hydrogène ou encore R est un radical alkyle en C₁ à C₆ ;
R4 représente un atome d'hydrogène, un ion monovalent divalent ou trivalent, ou un radical ammonium quaternaire;
et ledit copolymère comprenant au moins un motif de formule (II) 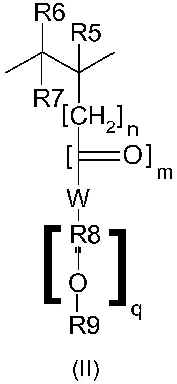
avec
R5, R6, R7 représentent indépendamment un atome d'hydrogène, un radical alkyle linéaire ou ramifié en C₁ à C₂₀ ou un radical-(CH₂)ₙ-(C=O)ₘ-W- (R8-O)_{q}-R9;
R8 représente un radical alkyle linéaire ou ramifié en C₂ à C₂₀;
R9 représente un atome d'hydrogène, ou un radical alkyle linéaire ou ramifié en C1 à C₂₀;
W représente un atome d'oxygène ou d'azote ;
n est un nombre entier compris de 0 à 2 ; m est un nombre entier égal à 0 ou 1 ;
q est un nombre entier compris 2 et 30 ;
et dont la masse molaire dudit copolymère est comprise de 500 à 18 000 daltons
la proportion relative de motif (I) par rapport au motif (II) dans le copolymère est comprise de 70 / 30 à 99 / 1.

## Patentansprüche

1. Verwendung von wenigstens einem Copolymer oder einem seiner Salze als Fluidisierungsmittel und Blockierungsmittel für eine Zusammensetzung, umfassend Wasser und ein hydraulisches Bindemittel auf Calciumsulfatbasis,
wobei das Copolymer wenigstens ein Motiv der Formel (I) umfasst: 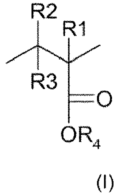 wobei
R1, R2, R3 unabhängig voneinander für ein Wasserstoffatom, ein lineares oder verzweigtes C₁-bis C₂₀-Alkylradikal oder ein -(CH₂)ₚ-COOR-Radikal oder eine ionisierte Form davon stehen, wobei p gleich 0 oder 1 ist und R ein Wasserstoffatom ist oder R ein C₁- bis C₆-Alkylradikal ist;
R4 für ein Wasserstoffatom, ein einwertiges, zweiwertiges oder dreiwertiges Ion oder ein quaternäres Ammoniumradikal steht;
und das Copolymer wenigstens ein Motiv der Formel (II) umfasst: 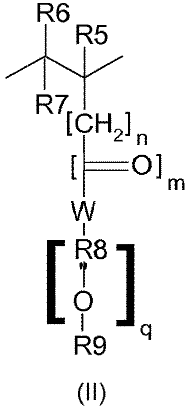
wobei
R5, R6, R7 unabhängig voneinander für ein Wasserstoffatom, ein lineares oder verzweigtes C₁-bis C₂₀-Alkylradikal oder ein -(CH₂)ₙ-(C=O)ₘ-W-(R8-O)_{q}-R9-Radikal stehen;
R8 für ein lineares oder verzweigtes C₂- bis C₂₀-Alkylradikal steht;
R9 für ein Wasserstoffatom oder ein lineares oder verzweigtes C₁- bis C₂₀-Alkylradikal steht;
W für ein Sauerstoff- oder Stickstoffatom steht;
n eine ganze Zahl in dem Bereich von 0 bis 2 ist;
m eine ganze Zahl gleich 0 oder 1 ist;
q eine ganze Zahl in dem Bereich von 2 bis 30 ist;
und wobei die Molmasse des Copolymers in dem Bereich von 500 bis 18.000 Dalton liegt,
wobei der relative Anteil des Motivs (I) in Bezug auf das Motiv (II) in dem Copolymer in dem Bereich von 70/30 bis 99/1 liegt.

2. Verwendung nach Anspruch 1, **dadurch gekennzeichnet, dass** das hydraulische Bindemittel auf Calciumsulfatbasis unter Gipsen auf Basis von Calciumsulfat-Halbhydrat (α oder β) oder Bindemitteln auf Basis von wasserfreiem Calciumsulfat ausgewählt ist.

3. Verwendung nach Anspruch 1, **dadurch gekennzeichnet, dass** das Copolymer oder eines seiner Salze verwendet wird, dessen Struktur eine Blockstruktur, eine zufällige Struktur, eine alternierende Struktur oder eine Gradientenstruktur ist.

4. Verwendung nach Anspruch 1, **dadurch gekennzeichnet, dass** das Copolymer oder eines seiner Salze verwendet wird, dessen Molmasse in dem Bereich von 1.000 bis 16.000 Dalton liegt.

5. Verwendung nach Anspruch 1, **dadurch gekennzeichnet, dass** das Copolymer verwendet wird, das ein R1-Radikal aufweist, das für ein Wasserstoffatom steht.

6. Verwendung nach Anspruch 1, **dadurch gekennzeichnet, dass** das Copolymer verwendet wird, das ein R2-Radikal aufweist, das für ein Wasserstoffatom steht.

7. Verwendung nach Anspruch 1, **dadurch gekennzeichnet, dass** das Copolymer verwendet wird, das ein R3-Radikal aufweist, das für ein Wasserstoffatom steht.

8. Verwendung nach Anspruch 1, **dadurch gekennzeichnet, dass** das Copolymer verwendet wird, das ein R4-Radikal aufweist, das für ein Wasserstoffatom steht.

9. Verwendung nach Anspruch 1, **dadurch gekennzeichnet, dass** das Copolymer verwendet wird, das ein R5-Radikal aufweist, das für ein Wasserstoffatom steht.

10. Verwendung nach Anspruch 1, **dadurch gekennzeichnet, dass** das Copolymer verwendet wird, das ein R6-Radikal aufweist, das für ein Wasserstoffatom steht.

11. Verwendung nach Anspruch 1, **dadurch gekennzeichnet, dass** das Copolymer verwendet wird, das ein R7-Radikal aufweist, das für ein Wasserstoffatom steht.

12. Verwendung nach Anspruch 1, **dadurch gekennzeichnet, dass** das Copolymer verwendet wird, bei dem W für ein Sauerstoffatom steht.

13. Verwendung nach Anspruch 1, **dadurch gekennzeichnet, dass** das Copolymer verwendet wird, das ein R8-Radikal aufweist, das für ein C₂-Alkylradikal steht.

14. Verwendung nach Anspruch 1, **dadurch gekennzeichnet, dass** das Copolymer verwendet wird, das ein R9-Radikal aufweist, das für ein C₁-Alkylradikal oder ein Wasserstoffatom steht.

15. Verwendung nach Anspruch 1, **dadurch gekennzeichnet, dass** das Copolymer verwendet wird, bei dem q eine ganze Zahl in dem Bereich von 4 bis 25 ist.

16. Zusammensetzung, umfassend Wasser, ein hydraulisches Bindemittel auf Calciumsulfatbasis und wenigstens ein Copolymer oder eines seiner Salze,
wobei das Copolymer wenigstens ein Motiv der Formel (I) umfasst: 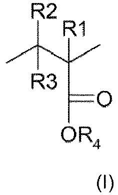 wobei
R1, R2, R3 unabhängig voneinander für ein Wasserstoffatom, ein lineares oder verzweigtes C₁-bis C₂₀-Alkylradikal oder ein -(CH₂)ₚ-COOR-Radikal oder eine ionisierte Form davon stehen, wobei p gleich 0 oder 1 ist und R ein Wasserstoffatom ist oder R ein C₁- bis C₆-Alkylradikal ist;
R4 für ein Wasserstoffatom, ein einwertiges, zweiwertiges oder dreiwertiges Ion oder ein quaternäres Ammoniumradikal steht;
und das Copolymer wenigstens ein Motiv der Formel (II) umfasst: 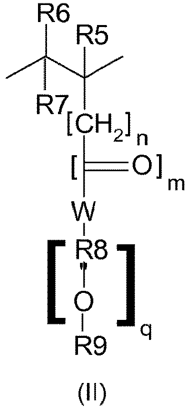
wobei
R5, R6, R7 unabhängig voneinander für ein Wasserstoffatom, ein lineares oder verzweigtes C₁-bis C₂₀-Alkylradikal oder ein -(CH₂)ₙ-(C=O)ₘ-W-(R8-O)_{q}-R9-Radikal stehen;
R8 für ein lineares oder verzweigtes C₂- bis C₂₀-Alkylradikal steht;
R9 für ein Wasserstoffatom oder ein lineares oder verzweigtes C₁- bis C₂₀-Alkylradikal steht;
W für ein Sauerstoff- oder Stickstoffatom steht;
n eine ganze Zahl in dem Bereich von 0 bis 2 ist;
m eine ganze Zahl gleich 0 oder 1 ist;
q eine ganze Zahl in dem Bereich von 2 bis 30 ist;
und wobei die Molmasse des Copolymers in dem Bereich von 500 bis 18.000 Dalton liegt,
wobei der relative Anteil des Motivs (I) in Bezug auf das Motiv (II) in dem Copolymer in dem Bereich von 70/30 bis 99/1 liegt.

17. Verwendung einer Zusammensetzung nach Anspruch 16 zur Herstellung von Elementen für den Bausektor, umfassend die Zugabe eines Entblockiermittels zu der Zusammensetzung.

18. Elemente für den Bausektor, die ausgehend von einer Zusammensetzung erhalten werden, die Wasser, ein hydraulisches Bindemittel auf Calciumsulfatbasis, ein Entblockiermittel und wenigstens ein Copolymer oder eines seiner Salze umfasst, wobei das Copolymer wenigstens ein Motiv der Formel (I) umfasst: 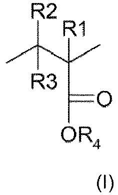 wobei
R1, R2, R3 unabhängig voneinander für ein Wasserstoffatom, ein lineares oder verzweigtes C₁-bis C₂₀-Alkylradikal oder ein -(CH₂)ₚ-COOR-Radikal oder eine ionisierte Form davon stehen, wobei p gleich 0 oder 1 ist und R ein Wasserstoffatom ist oder R ein C₁- bis C₆-Alkylradikal ist;
R4 für ein Wasserstoffatom, ein einwertiges, zweiwertiges oder dreiwertiges Ion oder ein quaternäres Ammoniumradikal steht;
und das Copolymer wenigstens ein Motiv der Formel (II) umfasst: 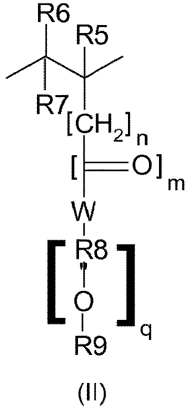
wobei
R5, R6, R7 unabhängig voneinander für ein Wasserstoffatom, ein lineares oder verzweigtes C₁-bis C₂₀-Alkylradikal oder ein -(CH₂)ₙ-(C=O)ₘ-W-(R8-O)_{q}-R9-Radikal stehen;
R8 für ein lineares oder verzweigtes C₂- bis C₂₀-Alkylradikal steht;
R9 für ein Wasserstoffatom oder ein lineares oder verzweigtes C₁- bis C₂₀-Alkylradikal steht;
W für ein Sauerstoff- oder Stickstoffatom steht;
n eine ganze Zahl in dem Bereich von 0 bis 2 ist;
m eine ganze Zahl gleich 0 oder 1 ist;
q eine ganze Zahl in dem Bereich von 2 bis 30 ist;
und wobei die Molmasse des Copolymers in dem Bereich von 500 bis 18.000 Dalton liegt,
wobei der relative Anteil des Motivs (I) in Bezug auf das Motiv (II) in dem Copolymer in dem Bereich von 70/30 bis 99/1 liegt.

## Claims

1. Use of at least one copolymer or a salt thereof as a plasticizer and blocking agent for a composition comprising water and a calcium sulphate-based hydraulic binder,
said copolymer comprising at least one unit of formula (I) 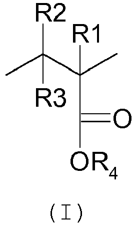 in which:
R1, R2 and R3 independently represent a hydrogen atom, a linear or branched C₁ to C₂₀ alkyl radical, or a -(CH₂)ₚ-COOR radical or an ionized form thereof, with p being equal to 0 or 1, and R is a hydrogen atom or else R is a C₁ to C₆ alkyl radical;
R4 represents a hydrogen atom, a monovalent, divalent or trivalent ion, or a quaternary ammonium radical;
and said copolymer comprising at least one unit of formula (II) 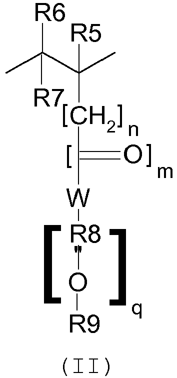
where
R5, R6 and R7 independently represent a hydrogen atom, a linear or branched C₁ to C₂₀ alkyl radical or a -(CH₂)ₙ-(C=O)ₘ-W-(R8-O)_{q}-R9 radical;
R8 represents a linear or branched C₂ to C₂₀ alkyl radical;
R9 represents a hydrogen atom, or a linear or branched C₁ to C₂₀ alkyl radical;
W represents an oxygen or nitrogen atom;
n is an integer between from 0 to 2;
m is an integer equal to 0 or 1;
q is an integer between 2 and 30;
and in which the molar mass of said copolymer is between from 500 to 18 000 daltons, the relative proportion of unit (I) with respect to unit (II) in the copolymer is between from 70/30 to 99/1.

2. Use according to Claim 1, **characterized in that** the calcium sulphate-based hydraulic binder is chosen from plasters based on calcium sulphate hemihydrate (□ or □) or binders based on anhydrous calcium sulphate.

3. Use according to Claim 1, **characterized in that** said copolymer or a salt thereof of which the structure is a block, random, alternating or gradient structure is used.

4. Use according to Claim 1, **characterized in that** said copolymer or a salt thereof of which the molar mass is between from 1000 to 16 000 daltons is used.

5. Use according to Claim 1, **characterized in that** said copolymer having an R1 radical representing a hydrogen atom is used.

6. Use according to Claim 1, **characterized in that** said copolymer having an R2 radical representing a hydrogen atom is used.

7. Use according to Claim 1, **characterized in that** said copolymer having an R3 radical representing a hydrogen atom is used.

8. Use according to Claim 1, **characterized in that** said copolymer having an R4 radical representing a hydrogen atom is used.

9. Use according to Claim 1, **characterized in that** said copolymer having an R5 radical representing a hydrogen atom is used.

10. Use according to Claim 1, **characterized in that** said copolymer having an R6 radical representing a hydrogen atom is used.

11. Use according to Claim 1, **characterized in that** said copolymer having an R7 radical representing a hydrogen atom is used.

12. Use according to Claim 1, **characterized in that** said copolymer for which W represents an oxygen atom is used.

13. Use according to Claim 1, **characterized in that** said copolymer having an R8 radical representing a C₂ alkyl radical is used.

14. Use according to Claim 1, **characterized in that** said copolymer having an R9 radical representing a C₁ alkyl radical or a hydrogen atom is used.

15. Use according to Claim 1, **characterized in that** said copolymer for which q is an integer between from 4 to 25 is used.

16. Composition comprising water, a calcium sulphate-based hydraulic binder, and at least one copolymer or a salt thereof,
said copolymer comprising at least one unit of formula (I) 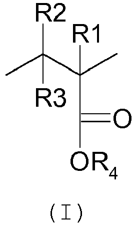 in which:
R1, R2 and R3 independently represent a hydrogen atom, a linear or branched C₁ to C₂₀ alkyl radical, or a -(CH₂)ₚ-COOR radical or an ionized form thereof, with p being equal to 0 or 1, and R is a hydrogen atom or else R is a C₁ to C₆ alkyl radical;
R4 represents a hydrogen atom, a monovalent, divalent or trivalent ion, or a quaternary ammonium radical;
and said copolymer comprising at least one unit of formula (II) 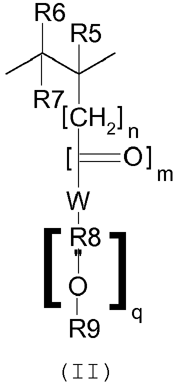
where
R5, R6 and R7 independently represent a hydrogen atom, a linear or branched C₁ to C₂₀ alkyl radical or a -(CH₂)ₙ-(C=O)ₘ-W-(R8-O)_{q}-R9 radical;
R8 represents a linear or branched C₂ to C₂₀ alkyl radical;
R9 represents a hydrogen atom, or a linear or branched C₁ to C₂₀ alkyl radical;
W represents an oxygen or nitrogen atom;
n is an integer between from 0 to 2;
m is an integer equal to 0 or 1;
q is an integer between 2 and 30;
and in which the molar mass of said copolymer is between from 500 to 18 000 daltons, the relative proportion of unit (I) with respect to unit (II) in the copolymer is between from 70/30 to 99/1.

17. Use of a composition according to Claim 16, for manufacturing elements for the construction field, comprising the addition of a deblocking agent to said composition.

18. Elements for the construction field, obtained using a composition comprising water, a calcium sulphate-based hydraulic binder, a deblocking agent, and at least one copolymer or a salt thereof,
said copolymer comprising at least one unit of formula (I) 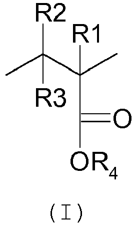 in which:
R1, R2 and R3 independently represent a hydrogen atom, a linear or branched C₁ to C₂₀ alkyl radical, or a -(CH₂)ₚ-COOR radical or an ionized form thereof, with p being equal to 0 or 1, and R is a hydrogen atom or else R is a C₁ to C₆ alkyl radical;
R4 represents a hydrogen atom, a monovalent, divalent or trivalent ion, or a quaternary ammonium radical;
and said copolymer comprising at least one unit of formula (II) 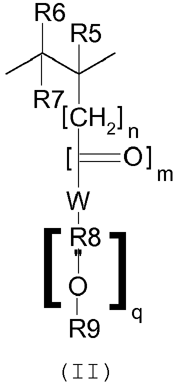
where
R5, R6 and R7 independently represent a hydrogen atom, a linear or branched C₁ to C₂₀ alkyl radical or a -(CH₂)ₙ-(C=O)ₘ-W-(R8-O)_{q}-R9 radical;
R8 represents a linear or branched C₂ to C₂₀ alkyl radical;
R9 represents a hydrogen atom, or a linear or branched C₁ to C₂₀ alkyl radical;
W represents an oxygen or nitrogen atom;
n is an integer between from 0 to 2;
m is an integer equal to 0 or 1;
q is an integer between 2 and 30;
and in which the molar mass of said copolymer is between from 500 to 18 000 daltons, the relative proportion of unit (I) with respect to unit (II) in the copolymer is between from 70/30 to 99/1.
